(19) Europäisches Patentamt
European Patent Office
Office européen des brevets

(11) **EP 0 562 856 B1**

(12) **EUROPEAN PATENT SPECIFICATION**

(45) Date of publication and mention
of the grant of the patent:
**21.05.1997 Bulletin 1997/21**

(51) Int Cl.6: **C08L 59/02**, C08L 61/28,
C08K 5/11, C08K 5/13,
C08L 59/04, C08K 5/10
// (C08L59/02, 61:28),
(C08L59/04, 61:28)

(21) Application number: **93302300.4**

(22) Date of filing: **25.03.1993**

(54) **Polyoxymethylene composition**

Polyoxymethylenzusammensetzungen

Compositions de polyoxyméthylène

(84) Designated Contracting States:
**AT BE CH DE ES FR GB IT LI NL**

(30) Priority: **26.03.1992 JP 68466/92**

(43) Date of publication of application:
**29.09.1993 Bulletin 1993/39**

(73) Proprietor: **POLYPLASTICS CO. LTD.**
**Chuo-Ku Osaka-shi Osaka 541 (JP)**

(72) Inventors:
• **Sugiyama, Noriyuki**
**Shizuoka (JP)**
• **Sato, Kouichi**
**Shizuoka (JP)**

(74) Representative: **Jackson, Peter**
**HYDE, HEIDE & O'DONNELL**
**10-12 Priests Bridge**
**London SW15 5JE (GB)**

(56) References cited:
**EP-A- 0 052 740**          **EP-A- 0 465 086**
**EP-A- 0 498 620**          **DE-B- 2 540 207**
**FR-A- 2 152 590**

## Description

The present invention relates to a polyoxymethylene composition having excellent heat stability, particularly one which generates little formaldehydic odor during molding, gives reduced amounts of mold deposits, and substantially retains its good mechanical characteristics even when exposed to heat for a long period.

Polyoxymethylene resins have excellent mechanical properties, moldability and resistance to fatigue, abrasion, wear, chemicals and heat, with the result that they have come to be used in a wide field including automobile, electrical and electronic appliances, other precision machines, building materials and piping. As the application field of polyoxymethylene resins has been enlarged and diversified, however, the demand for further improvements in the resin quality has correspondingly increased. One of the characteristics thus demanded is to suppress to low levels such problematic phenomena as mechanical strength reduction caused by extrusion or molding, formation of deposits on a mold surface (i.e. mold deposits), and reduction of mechanical characteristics caused by long-term heating (heat aging). One of the main factors causing these unfavorable phenomena is decomposition of the polymer by heating.

Polyoxymethylene has, owing to its chemical structure, a fundamental property of being easily decomposed in a thermally oxidizing atmosphere or under acidic or alkaline conditions. As means for stabilizing the chemically active ends of polyoxymethylene, there have been known a process which comprises esterifying the ends of a polyoxymethylene homopolymer by, e.g. acetylation, and a process which comprises copolymerizing trioxane with a monomer having an adjacent carbon bond, for example, a cyclic ether or cyclic formal and removing the unstable ends of the obtained copolymer by decomposition to obtain a copolymer having inactive stable ends. However, polyoxymethylene also causes decomposition through cleavage in its backbone moiety, and such decomposition cannot be inhibited merely by resorting to the above processes. Accordingly, it has been believed that the addition of an antioxidant and other stabilizers is indispensable to achieve the inhibition.

A sterically hindered phenol or amine has been used as such an antioxidant, and a combination of two or more other stabilizers selected from among polyamides, urea derivatives, amidines, and hydroxides and organic and inorganic acid salts of alkali and alkaline earth metals has been used in addition to the antioxidant.

However, even a polyoxymethylene composition containing such stabilizers is not completely protected from decomposition. In fact, such a composition generates formaldehyde through the decomposition of the backbone chain or from insufficiently stabilized ends when it is heated and exposed to oxygen in a cylinder in molding, so that the working atmosphere in extrusion, molding or processing is polluted; and that in long-term continuous molding, a powdery or tarry substance (mold deposit) adheres to a mold surface, which is one of the main factors lowering the operating efficiency and worsening the surface state of a molded article. Further, the mechanical strengths of the composition are also lowered by the decomposition of the polymer. Furthermore, an article molded from the composition suffers decomposition (heat aging) of the backbone chain under prolonged heating, which in turn lowers the mechanical strength and causes discoloration. Under these circumstances, many proposals have been made to obtain more effective stabilizer formulations, but satisfactory results have not always been attained. For example, Japanese Patent Publication-A Nos. 33943/1977 and 111346/1982 proposed to add a combination of a melamine-formaldehyde polycondensate, an antioxidant and other heat stabilizer to polyoxymethylene. Although this combination is effective in overcoming the disadvantage that melamine bleeds from a molded article or adheres to a mold because of its high sublimability, this effect is attained at the sacrifice of the very formaldehyde binding power of melamine, so that the combination is much inferior to melamine in its mold deposit-inhibiting effect.

The present inventors have made detailed studies on stabilizers to solve the above problems and have found that a solution can be achieved by adding a specific fatty acid ester of a polyhydric alcohol together with an antioxydant and a melamine-formaldehyde polycondensate to a polyoxymethylene composition. The present invention has been accomplished on the basis of this finding.

The present invention provides to a polyoxymethylene composition characterized by containing

0.01 to 5% by weight of a hindered phenol antioxidant,
0.01 to 10% by weight of a melamine-formaldehyde polycondensate wherein the molar ratio of melamine to formaldehyde is in the range from 1 : 0.8 to 1 : 6.0, and
0.05 to 4% by weight of a fatty acid ester of a polyhydric alcohol, the fatty acid ester being one in which at least one hydroxyl group of the alcohol component remains as such without being esterified,

each amount being based on the whole composition.

The components constituting the composition of the present invention will now be described in detail.

The melamine-formaldehyde polycondensate to be used in the present invention is one having a melamine to formaldehyde molar ratio ranging from 1:0.8 to 1:6.0, preferably from 1:1.0 to 1:3.0. Further, the polycondensate may be partially etherified with an alkanol having 2 to 4 carbon atoms in a molar ratio of melamine to the ether group of between 1 : 0.01 and 1 : 6.0, preferably between 1 : 0.01 and 1 : 1.0. The melamine-formaldehyde polycondensate to be used in the present invention can be prepared by various known processes. One such process comprises adding melamine to an aqueous solution of formaldehyde having a pH adjusted to 8 to 9, stirring the obtained mixture while keeping it at 60 to 90°C to effect the dissolution of melamine and the reaction of the reactants, whereby the solution becomes cloudy as the reaction proceeds, cooling the reaction mixture after the lapse of a suitable time to stop the condensation, and drying the resulting mixture by spraying or the like to give a melamine-formaldehyde polycondensate as a powder.

The polyoxymethylene composition of the present invention contains 0.01 to 10% by weight, preferably 0.02 to 3% by weight, more preferably 0.05 to 1% by weight of a melamine-formaldehyde polycondensate. If the content of the polycondensate is less than 0.01% by weight, the heat stability of the composition will not be improved sufficiently, while if it exceeds 10% by weight, the resulting composition is unusable because of its poor mechanical properties and very brittle nature.

The fatty acid ester of a polyhydric alcohol to be used in the present invention is preferably one derived from at least one saturated or unsaturated fatty acid having at least 10 carbon atoms and a polyhydric alcohol having 2 to 6 carbon atoms.

The polyhydric alcohol to be used in the preparation of the fatty acid ester is preferably at least one member selected from among ethylene glycol, diethylene glycol, triethylene glycol, propylene glycol, dipropylene glycol, butanediol, pentanediol, hexanediol, glycerin, diglycerin, triglycerin, threitol, erythritol, pentaerythritol, arabitol, ribitol, xylitol sorbite, sorbitan, sorbitol and mannitol.

On the other hand, the fatty acid to be used therein is preferably capric, lauric, myristic, palmitic, stearic, arachidic, behenic, montanic, lignoceric, myristoleic, palmitoleic, oleic, linoleic, linolenic, ricinolic, 12-hydroxystearic, sebacic or dimer acid, a natural fatty acid containing one or more of these acids or a mixture of two or more of them.

Among these fatty acid esters, those derived from a fatty acid selected from among palmitic, stearic, behenic and montanic acids and a polyhydric alcohol selected from among glycerin, pentaerythritol, sorbitan and sorbitol are preferable. Further, it is preferred that at least one hydroxyl group of the polyhydric alcohol constituting the fatty acid ester remain as such without being esterified. Particularly preferable examples of the fatty acid ester include glycerin monopalmitate, glycerin monostearate, glycerin monobehenate, glycerin monomontanate, pentaerythritol monopalmitate, pentaerythritol monostearate, pentaerythritol monobehenate, pentaerythritol dipalmitate, pentaerythritol distearate, pentaerythritol dibehenate, pentaerythritol tripalmitate, pentaerythritol tristearate, pentaerythritol tribehenate, pentaerythritol trimontanate, sorbitan monopalmitate, sorbitan monostearate, sorbitan monobehenate, sorbitan monomontanate, sorbitan dipalmitate, sorbitan distearate, sorbitan dibehenate, sorbitol monostearate, sorbitol monobehenate, sorbitol monomontanate, sorbitol distearate and sorbitol dibehenate, which may be used either each alone or as a mixture of two or more of them.

The composition of the present invention contains the fatty acid ester of a polyhydric alcohol in an amount of 0.05 to 4% by weight, preferably 0.05 to 2% by weight, more preferably 0.10 to 1% by weight. If the content of the ester is less than 0.05% by weight, no mold deposit inihibiting effect will be attained, while if it exceeds 4% by weight, the bite of a screw into the resulting composition in processing and molding will be poor, thereby increasing the molding cycle, or the fatty acid ester itself will adhere to a mold to form undesired mold deposits.

The melamine-formaldehyde polycondensate and the fatty acid ester of a polyhydric alcohol as described above minimize the decomposition of polyoxymethylene when added thereto together with a hindered phenol antioxidant, so that little decomposition gas generates in molding and the adhesion of decomposition gas to a mold is inhibited. Further, these additives themselves are presumed to give little mold deposit, because they are scarcely sublimable and decomposable.

The hindered phenol antioxidant to be used in the present invention includes 2,2'-methylenebis(4-methyl-6-t-butylphenol), 1,6-hexanediol bis[3-(3,5-di-t-butyl-4-hydroxyphenyl)propionate], pentaerythritol tetrakis[3-(3,5-di-t-butyl-4-hydroxyphenyl)propionate], triethylene glycol bis[3-(3-t-butyl-5-methyl-4-hydroxyphenyl)propionate], 1,3,5-trimethyl-2,4,6-tris(3,5-di-t-butyl-4-hydroxybenzyl)benzene, n-octadecyl 3-(4'-hydroxy-3',5'-di-t-butylphenyl)propionate, 4,4'-methylenebis(2,6-di-t-butylphenol), 4,4'-butylidenebis(6-t-butyl-3-methylphenol), 2,2'-thiodiethylbis[3-(3,5-di-t-butyl-4-hydroxyphenyl)propionate], distearyl 3,5-di-t-butyl-4-hydroxybenzylphosphonate, 2-t-butyl-6-(3-t-butyl-5-methyl-2-hydroxybenzyl)-4-methylphenyl acrylate and N,N'-hexamethylenebis-[3,5-di-t-butyl-4-hydroxyhydro-cinnamamide), which may be used either alone or as a mixture of two or more of them. Among these compounds, 1,6-hexanediol bis[3-(3,5-di-t-butyl-4 hydroxyphenyl)propionate], pentaerythritol tetrakis[3-(3,5-di-t-butyl-4-hydroxyphenyl)propionate], triethylene glycol bis[3-(3-t-butyl-5-methyl-4-hydroxyphenyl)propionate] and N,N'-hexamethylenebis-(3,5-di-t-butyl-4-hydroxyhydro-cinnamamide) are particularly preferable.

The composition of the present invention contains 0.01 to 5% by weight, preferably 0.05 to 2% by weight of a hindered phenol antioxidant.

If the content of the antioxidant is too low, no sufficient effect will be attained, while if it is too high, not only is no additional effect attained, but also the resulting composition is discolored.

The polyoxymethylene to be blended with the above additives is a polymer mainly comprising oxymethylene (-

$CH_2O$-) units, which includes not only polyoxymethylene homopolymers, but also copolymers, terpolymers and block polymers containing a small amount of other constituent units. Further, the polyoxymethylene may be either linear or branched or crosslinked. The degree of polymerization thereof is not particularly limited.

The composition of the present invention may further contain one or more members selected from among nitrogenous compounds other than the melamine-formaldehyde polycondensate according to the present invention, and metallic compounds such as hydroxides, inorganic acid salts, carboxylic acid salts and alkoxides of alkali or alkaline earth metals depending upon the object, though the use of these additives is not necessarily essential.

The nitrogenous compounds include polyamides, for example, homo- and co-polyamides such as nylon 12, nylon 6.10 and nylon 6.66.610; substituted polyamide having methylol groups or the like; nylon salts, polyamides prepared from caprolactam; and polyester amides prepared from caprolactone and caprolactam; condensates prepared from polyaminotriazole, dicarboxylic acid dihydrazide and urea by heating; nitrogenous polycondensates prepared from urea and diamines; urea condensate prepared by heating urea; polycondensates of cyanoguanidines with formaldehyde; and polycondensates of guanamines with formaldehyde.

The metallic compounds include hydroxides, carbonates, phosphates, silicates, borates, oxalates, malonates, succinates and adipates of sodium, potassium, magnesium, calcium and barium; salts of these metals with higher aliphatic acids having 10 to 32 carbon atoms, e.g. stearic acid; and salts thereof with higher aliphatic acids having a substituent such as a hydroxyl group. Further, the metallic compounds also include basic compounds having both at least one tertiary nitrogen atom and a metal carboxylate moiety, for example, sodium N-methyliminodiacetate, trisodium nitrilotriacetate, tetrasodium ethylenediaminetetraacetate, tetrapotassium ethylenediaminetetraacetate, dicalcium ethylenediaminetetraacetate, pentasodium diethylenetriaminepentaacetate, pentapotassium diethylenetriaminepentaacetate, hexasodium triethylenetetraminehexaacetate and tetrasodium ethylenebis(ethylamine)-N,N,N',N'-tetraacetate.

The composition of the present invention may further contain one or more conventional additives in order to impart desired characteristics thereto depending upon the object and such additives include lubricants, nucleating agents, mold release agents, antistatic agents, other surfactants, organic polymers, and inorganic and organic fibrous, powdery and flaky fillers.

The process for preparing the composition of the present invention is not particularly restricted. The composition can be easily prepared by a conventional process with conventional equipment for the preparation of resin compositions. For example, the composition can be prepared by (i) a process which comprises mixing the necessary components together, kneading and extruding the obtained mixture on an extruder into pellets and molding the pellets, (ii) a process which comprises preparing pellets different in composition, mixing the pellets at a predetermined ratio and molding the obtained pellet mixture into a molded article having an objective composition, or (iii) a process characterized by feeding one or more of the components directly into a molding machine. Further, a process which comprises initially pulverizing a part of the resin components and mixing the obtained powder with the rest of the components is effective in homogeneous blending of the components.

The resin composition of the present invention can be molded by any process selected from among extrusion, injection, compression molding, vacuum forming, blow molding and expansion molding.

As will be apparent from the above description, the combination of specific stabilizers according to the present invention considerably improves the heat stability of polyoxymethylene to give a polyoxymethylene resin composition which produces minimal mold staining even in long-term continuous molding and generates little formaldehydic odor in molding and processing, thus being favorable from the standpoint of industrial hygiene and working atmosphere.

Examples

The present invention will now be described by referring to the following non-limiting Examples.

The methods employed in the Examples for evaluating the characteristics are as follows.

(1) Amount of formaldehyde gas generated from the melt

The accurate weight (A g) of about 5 g of pellets was determined. The pellets were kept at 200°C in a metallic container for 5 minutes. Thereafter, the atmosphere in the container was absorbed into deionized water. The amount (B μg) of formaldehyde absorbed in the water was determined according to JIS K 0102, 2L "formaldehyde" to calculate the amount (C ppm) of formaldehyde generated per grain of the pellets.

$$B\ \mu g\ /\ A\ g = C\ ppm$$

(2) Moldability (amount of mold deposit)

A polyoxymethylene composition sample was continuously molded into articles having a specific shape on an injection machine under the following conditions for about 24 hours to evaluate the amount of mold deposit, i.e., the stain of a mold after continuous molding was evaluated by observation with the naked eye according to the following five criteria:

(molding conditions)

injection machine: NISSEI ps20E (manufactured by Nissei Jushi Kogyo (K.K.))
cylinder temperature: 200°C
injection pressure: 750 kg/cm$^2$ (73.6 MPa)
injection time: 4 sec
cooling time: 3 sec
mold temperature: 30°C

| A | B | C | D | E |
|---|---|---|---|---|
| little | | | | much (deposit over the whole surface) |

(3) Heat aging

1. evaluation of blooming to the surface of the molded article

A molded article was allowed to stand at 70°C and 80% RH for 3 days and then at 120°C for one day and night and the surface of the resulting article was observed with the naked eye to evaluate the blooming according to the following criteria:

A: no blooming
B: partial and slight blooming
C: thin bloom over the whole surface
D: thick bloom over the whole surface

2. physical life of the molded article

A polyoxymethylene composition sample was molded into a No.1 dumbbell-shaped test piece for tensile testing as stipulated in ASTM D638. This test piece was kept at 140°C in a Geer oven (manufactured by Toyo Seiki Co., Ltd.) and thereafter tested for tensile strength to determine the retention thereof with respect to the initial value. The time which had elapsed until the retention fell to 80% was regarded as the physical life of the molded article.

Examples 1 to 17

As shown in Table 1, a hindered phenol antioxidant, a melamine-formaldehyde polycondensate and a fatty acid ester of a polyhydric alcohol were added to a polyoxymethylene copolymer (a product of Polyplastics Co., Ltd., "Duracon"), followed by mixing. The obtained mixture was pelletized and evaluated for the above characteristics. The results are given in Table 1.

Comparative Examples 1 to 16

As shown in Table 2, mixtures not containing one of the melamine-formaldehyde polycondensate and the fatty acid ester of a polyhydric alcohol and mixtures containing melamine, 12-nylon or cyanoguanidine instead of the melamine-formaldehyde polycondensate were prepared and pelletized and evaluated in a similar manner to that of the Examples I to 17. The results are given in Table 2.

Table 1

| | | Example No. | | | | | | | | | | | | | | | | |
|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 |
| hindered phenol antioxidant | note 1 | a-1 | a-1 | a-1 | a-1 | a-1 | a-1 | a-1 | a-1 | a-2 | a-2 | a-2 | a-2 | a-2 | a-2 | a-2 | a-2 | a-2 |
| | (% by wt.) | 0.3 | 0.3 | 0.3 | 0.3 | 0.3 | 0.3 | 0.5 | 0.3 | 0.3 | 0.3 | 0.3 | 0.3 | 0.3 | 0.3 | 0.3 | 0.5 | 0.3 |
| melamine-formaldehyde polycondensate | note 2 | b-1 | b-2 | b-2 | b-2 | b-2 | b-2 | b-2 | b-3 | b-2 | b-2 | b-2 | b-2 | b-2 | b-4 | b-4 | b-4 | b-1 |
| | (% by wt.) | 0.3 | 0.3 | 0.5 | 1.0 | 0.3 | 0.3 | 0.3 | 0.3 | 0.3 | 0.3 | 0.3 | 0.3 | 0.3 | 0.3 | 0.5 | 0.3 | 0.1 |
| fatty acid ester of polyhydric alcohol | note 3 | c-1 | c-1 | c-1 | c-1 | c-1 | c-1 | c-1 | c-1 | c-1 | c-2 | c-3 | c-4 | c-5 | c-5 | c-5 | c-5 | c-1 |
| | (% by wt.) | 0.3 | 0.3 | 0.3 | 0.3 | 0.5 | 1.0 | 0.3 | 0.3 | 0.3 | 0.3 | 0.3 | 0.3 | 0.3 | 0.3 | 0.3 | 0.3 | 0.3 |
| amt. of formaldehyde gas generated (ppm) | | 50 | 70 | 68 | 60 | 65 | 63 | 70 | 81 | 66 | 69 | 65 | 65 | 70 | 106 | 103 | 95 | 57 |
| moldability (amt. of mold deposit) | | A | A | A | A | A | A | A | B | A | A | A | A | A | B | B | A | A |
| heat aging | bleeding | A | A | A | A | A | A | A | A | A | A | A | A | A | A | A | A | A |
| | physical life (days) | 74 | 72 | 85 | 97 | 75 | 77 | 80 | 71 | 70 | 76 | 74 | 73 | 70 | 79 | 86 | 85 | 70 |

Table 2



EP 0 562 856 B1

Table 2

| | | Comparative Example No. | | | | | | | | | | | | | | | |
|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 |
| hindered phenol antioxidant | note 1 | a-1 | a-1 | a-1 | a-1 | a-1 | a-1 | a-1 | a-1 | a-2 | a-1 | a-1 | a-1 | a-1 | a-1 | a-1 | a-1 |
| | (% by wt.) | 0.3 | 0.3 | 0.3 | 0.3 | 0.3 | 0.3 | 0.3 | 0.5 | 0.3 | 0.3 | 0.3 | 0.3 | 0.3 | 0.3 | 0.3 | 0.3 |
| melamine-formaldehyde polycondensate | note 2 | b-1 | | b-2 | b-2 | b-2 | b-2 | | | | | b-3 | | | | | b-4 |
| | (% by wt.) | 0.3 | | 0.3 | 0.3 | 0.3 | 1.0 | | | | | 0.3 | | | | | 0.3 |
| fatty acid ester of polyhydric alcohol | note 3 | | c-1 | | c-1 | c-1 | | c-1 | c-1 | c-1 | c-1 | | c-2 | c-2 | c-2 | c-2 | |
| | (% by wt.) | | 0.3 | | 0.03 | 5.0 | | 1.0 | 0.3 | 0.3 | 0.3 | | 0.3 | 0.3 | 0.3 | 0.3 | |
| melamine | (% by wt.) | | | | | | | | | | 0.3 | | | 0.3 | | | |
| 12-nylon | (% by wt.) | | | | | | | | | | | | | | 0.3 | | |
| cyanoguanidine | (% by wt.) | | | | | | | | | | | | | | | 0.3 | |
| amt. of formaldehyde gas generated (ppm) | | 66 | 90 | 73 | 73 | 55 | 53 | 82 | 88 | 86 | 50 | 90 | 90 | 50 | 40 | 176 | 122 |
| moldability (amt. of mold deposit) | | D | C | D | D | E | C | C | C | C | E | E | C | E | E | E | D |
| heat aging | bleeding | A | A | A | A | B | B | B | A | A | D | A | A | D | A | D | A |
| | physical life (days) | 64 | 17 | 70 | 70 | 78 | 91 | 24 | 20 | 15 | 70 | 72 | 19 | 70 | 18 | 113 | 73 |

```
note 1)   hindered phenol antioxidant:
     a-1   triethylene glycol bis[3-(3-t-butyl-5-methyl-
           4-hydroxyphenyl)propionate]
     a-2   pentaerythritol tetrakis[3-(3,5-di-t-butyl-
           4-hydroxyphenyl)propionate


note 2)   melamine-formaldehyde polycondensate
     b-1   melamine/formaldehyde ratio = 1 : 1.0
     b-2   melamine/formaldehyde ratio = 1 : 3.0
     b-3   melamine/formaldehyde ratio = 1 : 5.0
     b-4   trimethoxymethylmelamine/formaldehyde ratio
           = 1 : 3.0


note 3)   fatty acid ester of polyhydric alcohol
     c-1   glycerin monostearate
     c-2   glycerin monolaurate
     c-3   glycerin monobehenate
     c-4   mono and di-stearates of pentaerythritol
     c-5   mono and di-stearates of sorbitan
```

## Claims

1. A polyoxymethylene composition characterized by containing

   0.01 to 5% by weight of a hindered phenol antioxidant,
   0.01 to 10% by weight of a melamine-formaldehyde polycondensate wherein the molar ratio of melamine to formaldehyde is in the range from 1 : 0.8 to 1 : 6.0, and
   0.05 to 4% by weight of a fatty acid ester of a polyhydric alcohol, the fatty acid ester being one in which at least one hydroxyl group of the alcohol component remains as such without being esterified,

   each amount being based on the whole composition.

2. A polyoxymethylene composition as set forth in claim 1, wherein the amount of the hindered phenol antioxidant is 0.05 to 2% by weight, based on the whole composition.

3. A polyoxymethylene composition as set forth in claim 1 or claim 2, wherein the molar ratio of melamine to formaldehyde of the melamine-formaldehyde polycondensate is in the range from 1 : 1.0 to 1 : 3.0.

4. A polyoxymethylene composition as set forth in any preceding claim, wherein the said melamine-formaldehyde polycondensate is one which is partially etherified with an alkanol having 2 to 4 carbon atoms in a molar ratio of melamine to the ether group of between 1 : 0.01 and 1 : 6.0.

5. A polyoxymethylene composition as set forth in any preceding claim, wherein the amount of the melamine-formaldehyde polycondensate is in the range from 0.02 to 3.0% by weight, based on the whole composition.

6. A polyoxymethylene composition as set forth in any preceding claim, wherein the alcohol component constituting the fatty acid ester is selected from dihydric to hexahydric alcohols having 2 to 6 carbon atoms.

7. A polyoxymethylene composition as set forth in any preceding claim, wherein the fatty acid component constituting the fatty acid ester is a monobasic or dibasic one having at least 10 carbon atoms.

8. A polyoxymethylene composition as set forth in any preceding claim, wherein the amount of the fatty acid ester of a polyhydric alcohol is in the range from 0.10 to 1.0% by weight, based on the whole composition.

**Patentansprüche**

1. Polyoxymethylen-Zusammensetzung, dadurch gekennzeichnet, daß sie:

    0,01 bis 5 Gew.-% eines Antioxidationsmittels aus einem gehinderten Phenol,
    0,01 bis 10 Gew.-% eines Melamin-Formaldehyd-Polykondensats, worin das Stoffmengenverhältnis von Melamin zu Formaldehyd im Bereich von 1:0,8 bis 1:6,0 liegt, und
    0,05 bis 4 Gew.-% eines Fettsäureesters eines mehrwertigen Alkohols enthält,

    wobei der Fettsäureester einer ist, in dem wenigstens eine Hydroxylgruppe der Alkohol-Komponente ohne verestert zu werden als solche zurückbleibt, und jede Menge auf die gesamte Zusammensetzung bezogen ist.

2. Polyoxymethylen-Zusammensetzung gemäß Anspruch 1, worin die Menge des Antioxidationsmittels aus einem gehinderten Phenol 0,05 bis 2 Gew.-%, bezogen auf die gesamte Zusammensetzung, beträgt.

3. Polyoxymethylen-Zusammensetzung gemäß Anspruch 1 oder Anspruch 2, worin das Stoffmengenverhältnis von Melamin zu Formaldehyd des Melamin-Formaldehyd-Polykondensats im Bereich von 1:1,0 bis 1:3,0 liegt.

4. Polyoxymethylen-Zusammensetzung gemäß irgendeinem der vorhergehenden Ansprüche, worin das Melamin-Formaldehyd-Polykondensat eines ist, das teilweise mit einem Alkanol mit 2 bis 4 Kohlenstoffatomen in einem Stoffmengenverhältnis von Melamin zu der Ethergruppe von 1:0,01 bis 1:6,0 verethert ist.

5. Polyoxymethylen-Zusammensetzung gemäß irgendeinem der vorhergehenden Ansprüche, worin die Menge des Melamin-Formaldehyd-Polykondensats im Bereich von 0,02 bis 3,0 Gew.-%, bezogen auf die gesamte Zusammensetzung, liegt.

6. Polyoxymethylen-Zusammensetzung gemäß irgendeinem der vorhergehenden Ansprüche, worin die Alkohol-Komponente, die Bestandteil des Fettsäureesters ist, aus zweiwertigen bis sechswertigen Alkoholen mit 2 bis 6 Kohlenstoffatomen ausgewählt ist.

7. Polyoxymethylen-Zusammensetzung gemäß irgendeinem der vorhergehenden Ansprüche, worin die Fettsäure-Komponente, die Bestandteil des Fettsäureesters ist, eine einbasische oder zweibasische Fettsäure ist, die wenigstens 10 Kohlenstoffatome aufweist.

8. Polyoxymethylen-Zusammensetzung gemäß irgendeinem der vorhergehenden Ansprüche, worin die Menge des Fettsäureesters eines mehrwertigen Alkohols im Bereich von 0,10 bis 1,0 Gew.-%, bezogen auf die gesamte Zusammensetzung, liegt.

**Revendications**

1. Une composition de polyoxyméthylène caractérisée en ce qu'elle contient

    0,01 à 5% en poids d'un antioxydant phénolique stériquement encombré,
    0,01 à 10% en poids d'un polycondensat mélamine-formaldéhyde dans lequel le rapport molaire de la mélamine au formaldéhyde est compris entre 1:0,8 et 1:6,0, et
    0,05 à 4% en poids d'un ester d'acide gras d'un polyol, l'ester d'acide gras étant un ester dans lequel au moins un groupe hydroxyle du composant alcool reste tel quel sans être estérifié,

chaque quantité étant basée sur la composition entière.

**2.** Une composition de polyoxyméthylène telle que définie dans la revendication 1, dans laquelle la quantité de l'antioxydant phénolique stériquement encombré est de 0,05 à 2% en poids par rapport à la composiion entière.

**3.** Une composition de polyoxyméthylène telle que définie dans la revendication 1 ou la revendication 2, dans laquelle le rapport molaire de la mélamine au formaldéhyde dans le polycondensat mélamine-formaldéhyde est compris entre 1:1,0 et 1:3,0.

**4.** Une composition de polyoxyméthylène telle que définie dans l'une quelconque des revendications précédentes, dans laquelle ledit polycondensat mélamine-formaldéhyde est un polycondensat qui est partiellement éthérifié avec un alcanol ayant 2 à 4 atomes de carbone dans un rapport molaire de la mélamine au groupe éther compris entre 1:0,01 et 1:6,0.

**5.** Une composition de polyoxyméthylène telle que définie dans l'une quelconque des revendications précédentes, dans laquelle la quantité du polycondensat mélamine-formaldéhyde est comprise entre 0,02 et 3% en poids par rapport à la composition entière.

**6.** Une composition de polyoxyméthylène telle que définie dans l'une quelconque des revendications précédentes, dans laquelle le composant alcool constituant l'ester d'acide gras est choisi parmi les alcools ayant 2 à 6 fonctions alcool et ayant 2 à 6 atomes de carbone.

**7.** Une composition de polyoxyméthylène telle que définie dans l'une quelconque des revendications précédentes, dans laquelle le composant acide gras constituant l'ester d'acide gras est un monoacide ou un diacide ayant au moins 10 atomes de carbone.

**8.** Une composition de polyoxyméthylène telle que définie dans l'une quelconque des revendications précédentes, dans laquelle la quantité de l'ester d'acide gras du polyol est comprise entre 0,10 et 1,0% en poids par rapport à la composition entière.